# EUROPEAN PATENT SPECIFICATION

(11) **EP 0 293 311 B1**
(45) Date of publication and mention of the grant of the patent: **15.09.1993**
(21) Application number: 88420170.8
(22) Date of filing: 27.05.1988
(51) Int. Cl.: B29C 47/22

(54) **Apparatus for producing bent tubes**
Vorrichtung zur Herstellung von gebogenen Rohren
Dispositif pour la fabrication de tubes courbes

(30) Priority: 29.05.1987 JP 82923/87
(43) Date of publication of application: 30.11.1988
(73) Proprietor: Nemoto Kikaku Kogyo Co., Ltd., Yachiyo-shi Chiba-ken (JP)
(72) Inventor: Nemoto, Isao, Narashino-shi Chiba-ken (JP)
(74) Representative: Laurent, Michel

(56) References cited:
- DE-B- 1 107 926
- DE-C- 591 387
- DE-C- 727 974
- GB-A- 1 031 061
- US-A- 3 807 916
- US-A- 4 212 620
- PATENT ABSTRACTS OF JAPAN, vol. 8, no. 203 (M-326)[1640], 18th September 1984; & JP-A-59 93 551 (NEMOTO KIKAKU KOGYO K.K.)
- RUBBER CHEMISTRY AND TECHNOLOGY, vol. 54, 1981, May-June, no. 2, Akron, US; L.A. GOETTLER et al.: "Extrusion shaping of curved hose reinforced with short cellulose fibers", pages 277-300
- PATENT ABSTRACTS OF JAPAN, vol. 8, no. 244 (M-337)[1681], 9th November 1984; & JP-A-59 123 636 (TEITO GOMU SEIZOW K.K.)

## Description

### Background of the Invention

The present invention relates to an apparatus for producing bent tubes out of straight or pre-bent tubes by means of producing apparatus such as dies according to the preamble of claim 1.

One conventional method for obtaining a bent tube is to pass a bent fitting through a hollow space of a straight tube so as to force a plastic deformation of the tube according to the curvature of the fitting.

Another conventional method is to force a straight tube into a producing apparatus comprising a bent outer fitting and a bent inner fitting. The inner diameter of the bent outer fitting is nearly equal to the outer diameter of the tube and the outer diameter of the bent inner fitting is nearly equal to the inner diameter of the tube. Once the tube is forced into the producing apparatus, a plastic deformation according to the curvature of the producing apparatus remains on the tube. The inner fitting may be replaced by a pressurized fluid such as air and oil so that the outer surface of the tube is forced to fit with the inner surface of the outer fitting.

An apparatus for producing a bent tube is provided by a Japanese patent application No.59-123636, the apparatus comprises a tubular die and a core member. The tubular die is aligned parallel to the core member and supported dislocatable thereto. According to the apparatus, when the die is coaxially disposed relative to the core member, a straight tube is formed by passing a tube therethrough. When the die is off-centered relative to the core member, a bent tube is formed by passing a tube therethrough.

The above-mentioned apparatus is superior to the former fittings in that bent tubes of more varied forms are obtained thereby than by the fittings and that the workability thereof is higher than that of the fittings.

But, problems as to the above-mentioned apparatus is that the positioning of the second die relative to the first die is not enough precise resulting in dimensional errors in produced bent tubes. Another inconvenience in the apparatus is that the tubes are bent only in one direction because movement of the die relative to the core member is unidimensional, along a line perpendicular to the axis of the core member. As fare as the above-mentioned conventional apparatus is concerned, it was impractical to make the second die two-dimensionally dislocatable relative to the core member because of the bulky mechanism for positioning the second die.

Moreover, an apparatus for producing bent tubes is disclosed in "Vol 54 of Rubber Chemistry and Technology". As shown in Figure 10 in page 287 of the reference, the apparatus includes a die (4) and a core member (1) coaxially disposed in the die (4). In the apparatus, the die (4) can be vertically moved by a driving cylinder (11).

Thus, the apparatus has the same problem as the aforementioned apparatus in n° 59-123636, that is, the die (4) can only move in one direction, and the die (4) cannot be precisely positioned.

### SUMMARY OF THE INVENTION

An object of the present invention is, therefore, to provide an apparatus for producing more precisely dimensioned bent tubes.

Another object of the present invention is to provide an apparatus for producing three-dimensionally bending tubes.

In a aspect of the present invention, there is provided an apparatus for producing bent tubes, comprising:
- (a) a bending die having an axisymmetric inner surface for passing a tube member therethrough ;
- (b) a core member having an axi-symmetrical outer surface and disposed in the bending die in a spaced relation to the inner surface of the bending die so that the core member passes through a hollow space defined by the tube member and the tube member passes between the inner surface of the bending die and the outer surface of the core member ;
- (c) positioning means for positioning the bending die relative to the core member in a plane perpendicular to an axis of the core member wherein the poisitioning means comprises a motor for displacing the die relative to the core member, and transformation means for transforming a rotational movement of the motor to a linear movement of the die.

According to the invention, said transformation means has a composition of a worm and a worm wheel for reducing the rotational frequency, said worm having a generally cylindrical form tapered from both ends thereof to a central portion thereof, said worm wheel which has teeth being thrust toward said worm, each of the teeth comprising a disk supported from said worm wheel rotatably about their axes and thrust toward the worm by resilient means so as to eliminate backlash between said worm and said worm wheel.

Further features of the invention are defined in the dependent claims.

### BRIEF EXPLANATION OF THE DRAWINGS

Figure 1 shows an elevation view of an apparatus according to an embodiment of the present invention.

Figure 2 shows a plan view of an apparatus according to an embodiment of which an elevation view is shown by Figure 1.

Figure 3 shows a holder mechanism for holding a bending die according to an embodiment of the present invention.

Figure 4 is a cross-sectional view of a bending die and a core member together with surrounding mechanisms.

Figure 5 is a partially cut-off view of a worm gear mechanism according to an embodiment of the present invention.

### DETAILED DESCRIPTION OF THE PREFERRED EMBODIMENTS

Preferred embodiments of the present invention will be explained hereinafter in more detail with reference to the drawings in which like reference numérals denote same members or elements.

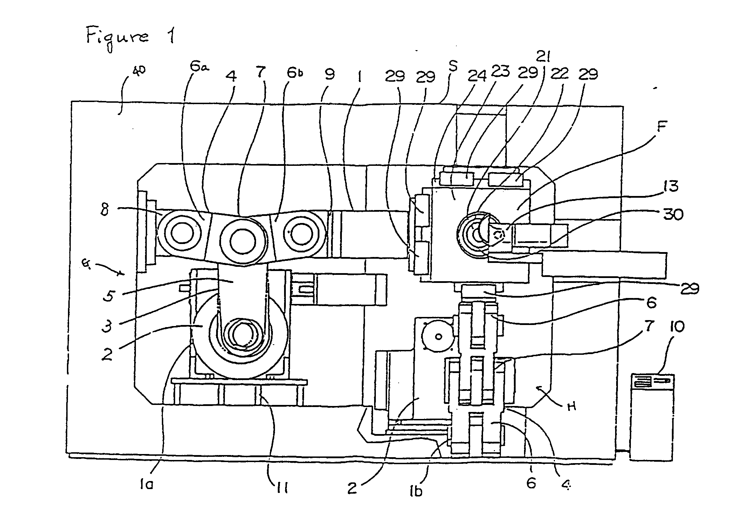

As shown in Figure 1, an apparatus S for producing bent tubes comprises a frame 40, a bending mechanism F, a first positioning mechanism G, and a second positioning mechanism H. The bending mechanism F includes a fixing bed 24 for fixing a position of a core member 22 relative to the frame 40 and a movable bed 23 for holding a bending die 21 dislocatable relative to the frame 40 in a plane perpendicular to an axis of the core member 22. In other words, the movable bed 23 is dislocatable bi-dimensionally in a plane whereon Figure 1 is drawn. A tube member (not shown) is forced to pass through a gap formed between the core member 22 and the bending die 21 along the core member 22, that is, in a direction perpendicular to the paper. By adjusting a position of the bending die 21, that is, by putting the bending die 21 off-centered relative to the core member 22, the tube member is bent as it passes through the gap. The tube is extruded from the outlet portion 30 after passing through the die 21. The movable bed 23 is connected to the first positioning mechanism G which determines a displacement of the movable bed 23 is a horizontal direction, that is, from side to side in Figure 1 by means of an electric motor 2 and a first transformation mechanism 1a connecting the motor 2 and the movable bed 23 for transforming a rotational movement of the motor 1a to a horizontal linear movement of the movable bed 23. The movable bed is also connected to a second positioning mechanism H which determines a displacement of the movable bed 23 in a vertical direction, that is, from top to bottom in the figure, by means of a similar mechanism 1b as the above-mentioned first transformation mechanism.

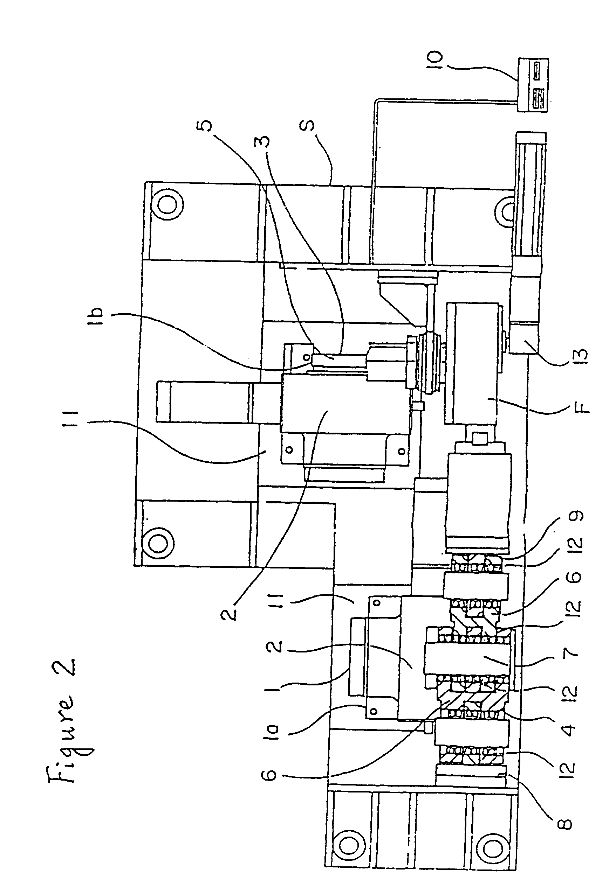

As shown in Figures 1 and 2, the fixing bed 24 and the electric motors 2 are secured to the frame 40. The movable bed 23 is supported from the fixing bed 24 by means of slid bearings 29 for a movement in a plane perpendicular to the axis of the core member 22 while keeping a sliding contact to the fixing bed 24. Each positioning mechanism comprises an electric motor 2, a transmission mechanism 31, a crank 3 and a link mechanism 4 co-working to transform a rotational movement of the electric motor 2 to a linear movement of the movable bed 23. The link mechanism 4 comprises a pair of link rods 6a, 6b which are connected by a hinge 7 at one of their ends. The other end of the link rod 6a is connected to a frame 40 of the spparatus S through a hinge 8. The other end of the link rod 6b is connected to the movable bed 23 through a hinge 9 and a tie rod 1. Operation of the electric motors 2 may preferrably by controled by a control unit 10 which controls a fine motion of the electric motors 2 so as to enable a delicate dimensioning of the bent tube.

The crank 3 and the link mechanism 4 may be replaced by a ball gear mechanism for taking the same role.

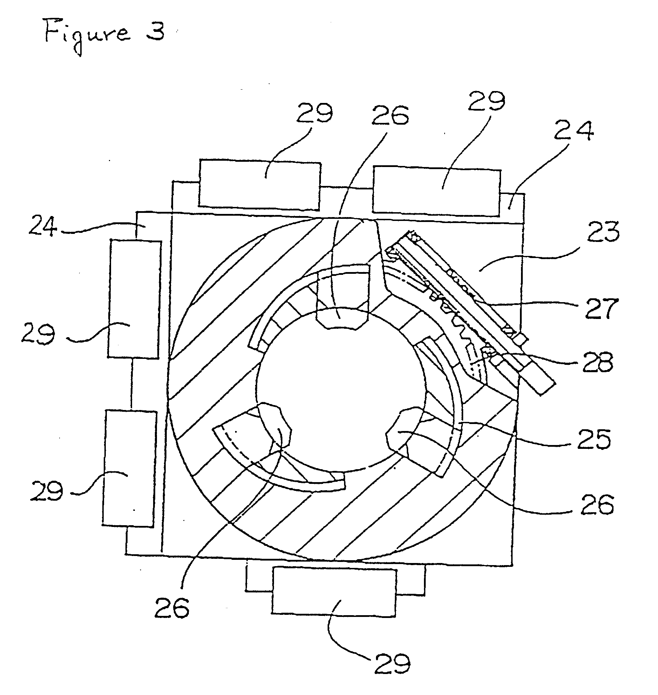

As shown in Figure 3, the movable bed 23 comprises a holding mechanism 25 having three claws 26 movable radially by means of worms 27 and worm wheels 28 meshing operatingly to each other.

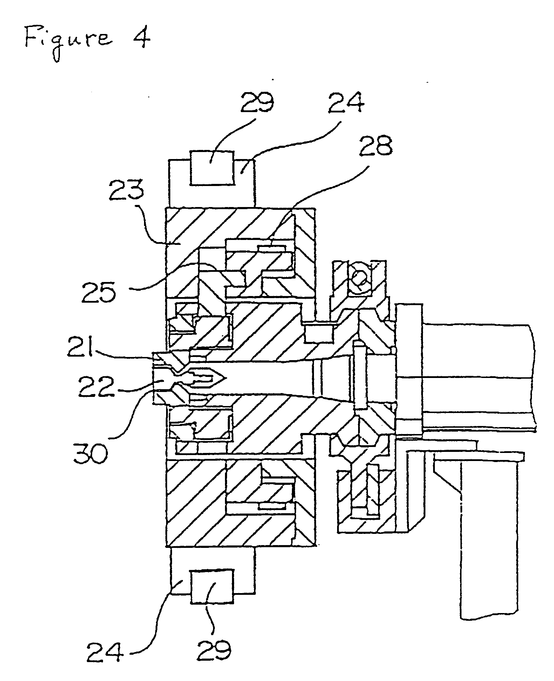

Figure 4 shows a partially cut-off view of the bending mechanism F. The bending die 21 is held by the holding mechanism 25 at a center thereof. The core member 22 is located in a hollow space defined by the bending die 21. The holding mechanism 25 and the bending die 21 held thereby are movable slidingly relative to the core member 22.

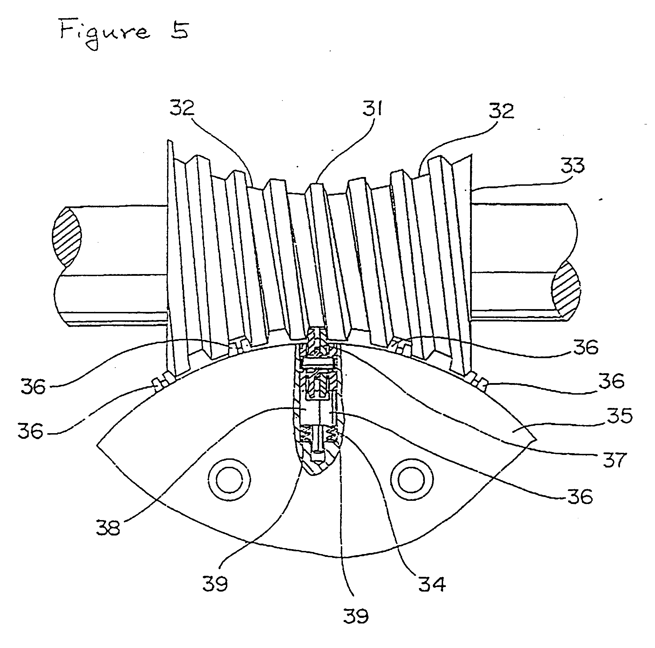

Figure 5 illustrates the transmission mechanism 31. The transmission mechanism 31 comprises a worm 33 connected to the electric motor 2, the worm 33 having a cross section with respect to a plane including an axis thereof concaving archingly with a generally constant radius of curvature, and a worm wheel mechanism 35 having a radius generally equal to the radius of curvature of the worm 33 and in meshing contact with the worm 33. Cogs 31 and grooves 32 are formed spirally around the worm 33. The worm wheel mechanism 35 comprises a plurality of teeth mechanism 37 which are received by the grooves 32 of the worm 33.

The teeth mechanism 36 comprises a pair of circular roller plates 37 disposed in respective roller pits 34 and supported rotatably about their co-axial shaft, a resilient means 39 giving a resilient force to thrust the roller plates 37 toward the worm 33 for a pressing contact of the teeth mechanism 36 with the warm. The teeth mechanism 36 is capable of tilting in a plane defined by the worm wheel mechanism 35. By virtue of the thrusting force thrusting the teeth mechanism 36 toward the cogs 31 and grooves 32 of the worm 33, backlashes which may exist between the worm 33 and the worm wheel mechanism 35 are eliminated.

Numeral 12 denotes a bearing mechanism which is preferably provided at the points wherein sliding contact of the elements occurs.

In the above embodiment, the bending die 21 moves relative to the core member 22 by means of the movable bed 23. But, as is clear by the above explanation, the core member 22 may be displaced relative to the bending die 21 as the position of the core member 22 relative to the bending die 21 or vice versa is important while producing a bent tube. Further, the link mechanism may be replaced by any kind of link mechanisms as far as the mechanism enables a fine motion control of the movable bed 23 according to a rotational movement of the rorm wheel mechanism 35.

By virtue of the above-mentioned construction, fine positioning of the bending die relative to the core member has become possible. More specifically, the fine positioning has become possible by virtue of the worm gear wherein backlashes are eliminated and the link, and crank mechanism which reduces the intensity of movement while it transforms a rotational movement of the electric motor to a linear movement of the movable bed 23. Further, the control unit for controlling a movement of the movable bed 23 makes the positioning of the movable bed easier and more precise.

## Claims

1. An apparatus for producing bent tubes comprising :
(a) a bending die (21) having an axi-symetric inner surface for passing a tube member therethrough ;
(b) a core member (22) having an axi-symetrical outer surface and disposed in the bending die (21) in a spaced relation to the inner surface of the bending die (21) so that the core member (22) passes through a hollow space defined by the tube member and the tube member passes between the inner surface of the bending die (21) and the outer surface of the core member ; and,
(c) positioning means (G,H) for positioning the bending die (21) relative to the core member (22) in a plane perpendicular to an axis of the core member (22) wherein the positioning means (G,H) comprises a motor (2) for displacing the die (21) relative to the core member (22), and transformation means (1a,1b) for transforming a rotational movement of the motor (2) to a linear movement of the die (21) ;
characterized in that said transformation means (1a,1b) having a composition of a worm (33) and a worm wheel (35) for reducing the rotational frequency, said worm (33) having a generally cylindrical form tapered from both ends thereof to a central portion thereof, said worm wheel (35) which has teeth (36) being thrust toward said worm (33), each of the teeth (36) comprising a disk (37) supported from said worm wheel (35) rotatably about their axes and thrust toward the worm (33) by resilient means (39) so as to eliminate backlash between said worm (33) and said worm wheel (35).

2. An apparatus for producing bent tubes according to claim 1, wherein the positioning means (G,H) comprises a motor means (2) for displacing the bending die relative to the tubular die.

3. An apparatus for producing bent tubes according to claim 2, wherein the motor means (2) is capable of displacing the bending die relative to the core member as the tube is passing through the bending die.

4. An apparatus for producing bent tubes according to claim 2, wherein the positioning means (G,H) comprises an electric motor and transformation means for transproducing a rotational movement of the electric motor to a linear movement of the bending die.

5. An apparatus for producing bent tubes according to claim 2, wherein the positioning means comprises a pair of electric motors (1a,1b) and transformation means for transproducing a rotational movement of the electric motors to a bi-axial movement of the bending die.

6. An apparatus for producing bent tubes according to claim 4, wherein the transformation means comprises a crank means (3) and a link means (4) connected operatingly to each other.

7. An apparatus for producing bent tubes according to claim 4, wherein the transformation means comprises a ball gear mechanism.

8. An apparatus for producing bent tubes according to claim 2 which further comprises a drive means for driving the tube member through the tubular die and the bending die.

9. An apparatus for producing bent tubes according to claim 2 which further comprises a control means for controling a position of the positioning means.

## Patentansprüche

1. Vorrichtung zur Herstellung von gebogenen Rohren mit
- (a) einem Biegeformgeber (21) mit einer axialsymmetrischen inneren Oberfläche zum Durchtreten eines Röhrenteiles,
- (b) einem Kernteil (22) mit einer axialsymmetrischen äußeren Oberfläche, das in dem Biegeformgeber (21) in räumlichen Bezug zu der inneren Oberfläche des Biegeformgebers (21) angeordnet ist, so daß das Kernteil (22) durch einen durch das Röhrenteil gebildeten Hohlraum durchläuft und das Kernteil zwischen der inneren Oberfläche des Biegeformgebers (21) und der äußeren Oberfläche des Kernteiles durchläuft und
- (c) Positioniermittel (G, H) zum Positionieren des Biegeformgebers (21) in Bezug auf das Kernteil (22) in einer Ebene rechtwinklig auf einer Achse des Kernteiles (22), wobei das Positioniermittel (G, H) einen Motor (2) zum Verschieben des Formgebers (21) in Bezug auf das Kernteil (22) und Übertragungsmittel (1a, 1b) zum Übertragen einer Drehbewegung des Motors (2) in eine lineare Bewegung des Formgebers (21) aufweist,
dadurch gekennzeichnet, daß das Übertragungsmittel (1a, 1b) eine Zusammensetzung aus einer Schnecke (33) und einem Schneckenrad (35) zum Herabsetzen der Drehfrequenz hat, wobei die Schnecke (33) eine im wesentlichen zylindrische, von beiden Enden zu einer Zentralposition konisch zulaufende Form hat, und das Schneckenrad (35) gegen die Schnecke (33) stoßende Zähne (36) hat, wobei jeder der Zähne (36) eine Scheibe (37) aufweist, die um ihre Achsen drehbar durch das Schneckenrad (35) gehalten und durch Federmittel (39) gegen die Schnecke (33) geschoben sind, so daß ein toter Gang zwischen der Schnecke (33) und dem Schneckenrad (35) beseitigt ist.

2. Vorrichtung zur Herstellung von gebogenen Rohren nach Anspruch 1, bei der das Positioniermittel (G, H) einen Motor (2) zum Verschieben des Biegeformgebers in Bezug auf den röhrenartigen Formgeber aufweist.

3. Vorrichtung zur Herstellung von gebogenen Rohren nach Anspruch 2, bei der der Motor (2) zum Verschieben des Biegeformgebers in Bezug auf das Kernteil bei Durchlaufen des Rohres durch den Biegeformgeber imstande ist.

4. Vorrichtung zur Herstellung von gebogenen Rohren nach Anspruch 2, bei der das Positioniermittel (G, H) einen Elektromotor und Übertragungsmittel zum Übertragen einer Drehbewegung des Elektromotors in eine lineare Bewegung des Biegeformgebers aufweist.

5. Vorrichtung zur Herstellung von gebogenen Rohren nach Anspruch 2, bei der das Positioniermittel ein Paar von Elektromotoren (2) und Übertragungsmittel zum Übertragen einer Drehbewegung der Elektromotoren in eine zweiachsige Bewegung des Biegeformgebers aufweist.

6. Vorrichtung zur Herstellung von gebogenen Rohren nach Anspruch 4, bei der das Übertragungsmittel miteinander betriebsmäßig verbundene Hebelmittel (3) und Verbindungsmittel (4) aufweist.

7. Vorrichtung zur Herstellung von gebogenen Rohren nach Anspruch 4, bei der das Übertragungsmittel einen Kugelscheibenmechanismus aufweist.

8. Vorrichtung zur Herstellung von gebogenen Rohren nach Anspruch 2, die weiterhin Schubmittel zum Schieben des Rohrteiles durch den röhrenartigen Formgeber und den Biegeformgeber aufweist.

9. Vorrichtung zur Herstellung von gebogenen Rohren nach Anspruch 2, die weiterhin ein Steuermittel zum Kontrollieren einer Position des Positioniermittels aufweist.

## Revendications

1. Dispositif pour la fabrication de tubes courbes comprenant :
(a) une matrice de cintrage (21) ayant une surface interne axisymétrique, prévue pour permettre le passage d'un élément de tube ;
(b) un noyau (22) présentant une surface externe axisymétrique et disposé dans la matrice de cintrage (21) à distance de la surface interne de la matrice de cintrage (21) de telle sorte que le noyau (22) passe à travers un espace creux défini par l'élément de tube et que l'élément de tube passe entre la surface interne de la matrice de cintrage (21) et la surface externe du noyau ; et,
(c) un moyen de positionnement (G,H) pour positionner la matrice de cintrage (21) par rapport au noyau (22) dans un plan perpendiculaire à un axe du noyau (22), dans lequel le dispositif de positionnement (G,H) comprend un moteur (2) permettant de déplacer la matrice (21) par rapport au noyau (22), et un moyen de transformation (1a,1b) permettant de transformer un mouvement rotatif du moteur (2) en un mouvement linéaire de la matrice (21) ;
caractérisé en ce que ledit moyen de transformation (1a,1b) comporte une vis sans fin (33) et une roue à vis sans fin (35) pour réduire la fréquence de rotation, ladite vis sans fin (33) ayant une forme généralement cylindrique, biseautée à partir de ses deux extrémités en direction d'une partie centrale, ladite roue à vis sans fin (35) qui est dotée de dents (36) étant plaquée contre ladite vis sans fin (33), chacune des dents (36) comprenant un disque (37) monté libre en rotation autour de leur axe sur ladite roue à vis sans fin (35) et plaqué contre la vis sans fin (33) par un moyen élastique (39) de façon à éliminer le jeu entre ladite vis sans fin (33) et ladite roue à vis sans fin (35).

2. Dispositif pour la fabrication de tubes courbes selon la revendication 1, caractérisé en ce que le dispositif de positionnement (G,H) comprend un moyen moteur (2) pour déplacer la matrice de cintrage par rapport à la matrice tubulaire.

3. Dispositif pour la fabrication de tubes courbes selon la revendication 2, caractérisé en ce que le moyen moteur (2) peut déplacer la matrice de cintrage par rapport au noyau à mesure que le tube traverse la matrice de cintrage.

4. Dispositif pour la fabrication de tubes courbes selon la revendication 2, caractérisé en ce que le moyen de positionnement (G,H) comprend un moteur électrique et un moyen de transformation permettant de transformer un mouvement rotatif du moteur électrique en un mouvement linéaire de la matrice de cintrage.

5. Dispositif pour la fabrication de tubes courbes selon la revendication 2, caractérisé en ce que le moyen de positionnement comprend une paire de moteurs électriques (1a,1b) et un moyen de transformation permettant de transformer un mouvement rotatif des moteurs électriques en un mouvement biaxial de la matrice de cintrage.

6. Dispositif pour la fabrication de tubes courbes selon la revendication 4, caractérisé en ce que le moyen de transformation comprend une bielle (3) et un élément de liaison (4) reliés entre eux de façon fonctionnelle.

7. Dispositif pour la fabrication de tubes courbes selon la revendication 4, caractérisé en ce que le moyen de transformation comprend un mécanisme à levier à rotule.

8. Dispositif pour la fabrication de tubes courbes selon la revendication 2, caractérisé en ce qu'il comprend également un moyen d'entraînement pour entraîner l'élément de tube à travers la matrice tubulaire et la matrice de cintrage.

9. Dispositif pour la fabrication de tubes courbes selon la revendication 2, caractérisé en ce qu'il comprend également un moyen de commande permettant de commander une position du moyen de positionnement.
